# EUROPÄISCHE PATENTSCHRIFT

(11) **EP 2 999 567 B1**
(45) Veröffentlichungstag und Bekanntmachung des Hinweises auf die Patenterteilung: **23.10.2019**
(21) Anmeldenummer: 14725370.2
(22) Anmeldetag: 20.05.2014
(51) Int. Cl.: B23F 23/04, B23F 23/06, B23F 17/00, B23F 19/06, B23F 23/02

(54) **VERFAHREN ZUM ERZEUGEN UND/ODER BEARBEITEN EINER VERZAHNUNG UND VERZAHNUNGSMASCHINE**
METHOD FOR PRODUCING AND/OR PROCESSING A GEAR AND GEAR CUTTING MACHINE
PROCÉDÉ DE FABRICATION ET/OU D'USINAGE D'UNE DENTURE, ET MACHINE À USINER LES DENTURES

(30) Priorität: 22.05.2013 DE 102013008709
(43) Veröffentlichungstag der Anmeldung: 30.03.2016
(73) Patentinhaber: Gleason-Pfauter Maschinenfabrik GmbH, 71636 Ludwigsburg (DE)
(72) Erfinder: BROGNI, Johannes, 3293 Dotzigen (CH); KREBSER, Gerhard, 71563 Affalterbach (DE); SCHNEIDER, Christoph, 71686 Remseck (DE); PHILIPPIN, Matthias, 71277 Rutesheim (DE)
(74) Vertreter: Leinweber & Zimmermann
(86) Internationale Anmeldenummer: PCT/EP2014/001363
(87) Internationale Veröffentlichungsnummer: WO 2014/187561

(56) Entgegenhaltungen:
- DE-A1- 10 249 039
- DE-A1- 19 907 617
- DE-A1-102007 019 558
- DE-A1-102007 030 955
- DE-A1-102010 028 032

## Beschreibung

Die Erfindung betrifft ein Verfahren zum Erzeugen und/oder Bearbeiten einer Verzahnung an einem Werkstück, bei dem man das Werkstück von einem ersten Ort, an dem es auf einer mit einer Werkstückspindel verbundenen Aufspannvorrichtung aufgespannt in Bearbeitungseingriff mit einem ersten Werkzeug gebracht wird, unter Beibehaltung seiner Aufspannung eine Bewegung zu einem zweiten Ort ausführen läßt, an dem es in Bearbeitungseingriff mit einem zweiten Werkzeug gebracht wird, sowie eine zur Ausführung eines solchen Verfahrens ausgelegte Verzahnungsmaschine.

Derartige Verfahren zur Verzahnungsbearbeitung, bei denen zwei oder mehrere verschiedene Werkzeuge zur Erzeugung und/oder Bearbeitung der Verzahnung verwendet werden, sind in der Technik seit langem bekannt. Beispielsweise zählt hierzu die Erzeugung einer Verzahnung an einem Werkstückrohling in einer ersten Bearbeitung, beispielsweise durch einen Wälzfräser, und das nachfolgende Anfasen und Entgraten der hergestellten Verzahnung durch entsprechende Werkzeuge.

Für diese kombinierte Wälzfräs- und Anfas-/Entgratoperation in einem gemeinsamen Bearbeitungsraum gibt es zum einen die ebenfalls seit langem bekannte Möglichkeit, zunächst die Verzahnung an dem auf die Aufspannvorrichtung aufgespannten Werkzeugrohling zu erzeugen, und anschließend die Entgratung noch am gleichen Ort vorzunehmen. Problematisch bei diesem Verfahren ist jedoch die Stillstandszeit des Wälzfräsers während der Entgratbearbeitung, so daß vergleichsweise lange Nebenzeiten entstehen.

Eine weitere ebenfalls aus dem Stand der Technik bekannte Verfahrensvariante zur Vermeidung der langen Nebenzeiten sieht ebenfalls das Wälzfräsen der Verzahnung sowie das Entgraten am gleichen Ort vor, allerdings arbeiten die beiden Werkzeuge zeitparallel an verschiedenen Seiten des Werkstückes. Dann verringert sich die Zeitspanne, in der das Hauptbearbeitungswerkzeug (der Wälzfräser) nicht arbeitet, im Wesentlichen auf den für den Austausch des bearbeiteten Werkstücks durch einen neuen Werkstückrohling erforderlichen Zeitaufwand. Ein solches Verfahren ist beispielsweise durch die Wälzfräsmaschinen der Baureihe P60/P90 aus dem Hause der Anmelderin offenbart.

In jüngerer Zeit sind darüber hinaus vermehrt Verfahren vorgeschlagen worden, bei denen zur Minimierung der Nebenzeiten des Hauptbearbeitungswerkzeugs die Werkstückspindel vom Ort der ersten Bearbeitung zu einem zweiten Ort bewegt wird, an dem dann die zweite Bearbeitung vorgenommen wird, in diesem Beispiel das Anfasen und Entgraten. Gleichzeitig wird eine weitere Werkstückspindel zum ersten Bearbeitungsort bewegt, mit bereits aufgespanntem nächstem Werkstückrohling. Bei diesen nach dem Oberbegriff von Anspruch 1 arbeitenden Verfahren finden beispielsweise die Bewegungen der Spindel zwischen den Arbeitsorten entlang eines Abschnitts einer Kreisbahn statt, was sich durch Anordnung der Spindeln auf einem gemeinsamen Drehhalter (Drehteller/Drehtrommel) besonders einfach realisieren läßt. Es muß lediglich der Drehhalter um 180° (bei zwei Spindeln) oder um 360°/n (bei n Spindeln) weitergetaktet werden, um ein Werkstück von einem Bearbeitungsort zum nächsten zu verbringen. Beispiele für solche in einem Bearbeitungsraum kombinierte Wälzfräs- und Anfas-/Entgratoperationen sind etwa in EP 2 029 306 B1 offenbart. Sie werden üblicherweise als Doppelspindelsysteme (oder Mehrfachspindelsysteme) bezeichnet.

Diese Mehrfachspindelsysteme sind nicht nur für die oben erläuterten kombinierten Wälzfräs- und Anfas-/Entgratoperationen bekannt, sondern auch beispielsweise für das Verzahnungsschleifen. So arbeitet die von der Firma Kapp entwickelte Verzahnungsschleifmaschine KX3 beispielsweise mit einem Drehhalter, in dem azimutal äquidistant drei Werkstückspindeln gelagert sind. An den entsprechenden drei Positionen, zwischen denen die auf den Werkstückspindeln aufgespannten Werkstücke getaktet werden können, werden die Verzahnungen an einem ersten Ort einer Schrupp-Bearbeitung unterzogen, nach Weitertaktung an dem nächsten Ort einer Schlichtbearbeitung unterzogen, und am dritten Ort schließlich aus dem Bearbeitungsraum entfernt und durch ein neues zu schleifendes Werkstück ersetzt.

Dabei besteht eine über einen Drehhalter erreichte Zeitersparnis bereits dann, wenn nur eine echte Werkstückbearbeitungsposition vorgesehen ist, wie beispielsweise in der EP 1 146 983 B1 offenbart. Dann kann nämlich in der zweiten Position das Be- und Entladen der Werkstücke erfolgen und bereits eine sogenannte Einzentrieroperation, bei der sensorisch die Drehlage der Zahnlücke mit Bezug auf eine feste Bezugsdrehlage der Werkstückspindel bestimmt wird. Da diese Spindel nach Weitertakten des Drehhalters die das Werkstück für den Bearbeitungseingriff antreibende Werkstückspindel ist, sind somit am Ort der Hauptbearbeitung die für den richtigen Eingriff des Werkzeugs in die Verzahnung des Werkstückes erforderlichen Informationen bereits in der Maschinensteuerung vorhanden und müssen nicht erst am Ort der Hauptbearbeitung ermittelt werden, wodurch sich die unproduktiven Nebenzeiten verringern.

Hinsichtlich der Fixierung des Drehhalters für diese Zwei- oder Mehrspindelsysteme ist zudem in EP 2 200 776 B1 vorgeschlagen worden, den ohnehin für die Drehung des Drehhalters vorhandenen Antrieb dazu zu nutzen, den Drehhalter gegen einen Festanschlag zu fahren und in dieser Position zu halten.

DE 10 2007 030 955 A1 offenbart eine Honmaschine mit einer Werkstückspindel, auf die die Werkstücke von einem Werkstückwechsler gebracht werden, nachdem sie zuvor auf einer Indexierspindel einzentriert wurden. Damit die daraus erhaltene Zentrierinformation nicht wieder verlorengeht, wechselt der Werkstückwechsler die Werkstücke in drehfester Lage gegenüber ihrer Aufspannung zusammen mit der Aufspannung.

DE 10 249 039 A1 offenbart eine Vorrichtung zum Verzahnen und Nachbearbeiten von Werkstücken, konkret wird ein Werkstück mit einem Wälzfräser bearbeitet und dann nicht mehr am Ort der Wälzfräsbearbeitung einem Wälzentgraten unterworfen.

Der Erfindung liegt die Aufgabe zugrunde, derartige Verfahren der Verzahnungsbearbeitung mit (wenigstens) zwei Bearbeitungen insbesondere hinsichtlich einer genauen und zuverlässigen Positionierung der für die Bearbeitung vorgesehenen Maschinenachsen nochmals zu verbessern.

Diese Aufgabe wird von der Erfindung durch ein Verfahren mit den Merkmalen von Anspruch 1 gelöst.

Verblüffenderweise werden somit von der Erfindung zunächst die oben beschriebenen Vorteile des Im Bearbeitungsraum weitergetakteten Drehhalters für die Werkzeugspindeln aufgegeben, da die Werkstückspindel aufgrund der Lösung ihrer Verbindung mit der Aufspannvorrichtung am Ort der ersten Bearbeitung verbleibt und das Werkstück mit der am Ort der zweiten Bearbeitung vorgesehenen Werkstückspindel über seine Aufspannung verbunden wird. Die Werkzeugspindeln folgen somit den Werkstücken bei deren Ortswechsel nicht mehr. Sie können dagegen z.B. im Maschinenbett der Verzahnungsmaschine angeordnet werden, somit wird eine insgesamt höhere Steifigkeit der Gesamtmaschine und dadurch eine genaue und zuverlässige Positionierung der Maschinenachsen erreicht.

Unter der Formulierung "erstes Werkzeug" und "zweites Werkzeug" ist nicht einschränkend zu verstehen, daß die Erfindung auf genau zwei Spindeln und genau zwei Bearbeitungen eingeschränkt ist, obgleich dies eine Variante der Erfindung darstellt. Vielmehr können auch drei oder mehr Bearbeitungswerkzeuge an drei oder mehr Orten zum Einsatz kommen.

In einer bevorzugten Verfahrensgestaltung wird parallel zur Bearbeitung des Werkstücks am zweiten Ort an dem ersten Ort eine Verzahnung an einem auf einer zweiten Aufspannvorrichtung aufgespannten weiteren Werkstück erzeugt oder bearbeitet. Durch die Möglichkeit der Parallelbearbeitung kann somit Bearbeitungszeit eingespart werden, wodurch sich die Produktivität des Verfahrens erhöht.

Sofern im folgenden vereinfachend vom Bearbeiten einer Verzahnung gesprochen wird, umfaßt dies auch deren erstmalige Erzeugung. Grundsätzlich umfaßt die Erfindung Verfahren, bei denen die erstmalige Bearbeitung des Werkstücks die Erzeugung der Verzahnung ist, beispielsweise durch Wälzfräsen, aber auch Verfahren, bei denen vor der erstmaligen Bearbeitung die Verzahnung am Werkstück bereits erzeugt ist, beispielsweise Hartfeinbearbeitungen wie z.B. Wälzschleifen.

Somit kann das weitere Werkstück vor der Bearbeitung seiner Verzahnung an dem ersten Ort unter Beibehaltung seiner Aufspannung von dem zweiten Ort oder einem von dem zweiten Ort verschiedenen dritten Ort zu dem ersten Ort bewegt werden. Vorrichtungstechnisch läßt sich dies beispielsweise dadurch realisieren, daß zwei Werkstücke beim Ortswechsel einen Platztausch vornehmen, oder daß bei drei vorgesehenen Orten die Werkstücke um eine Position weitergetaktet werden.

In einer möglichen Verfahrensgestaltung wird das Werkstück nach seiner Bearbeitung mit dem zweiten Werkzeug nochmals mit dem ersten Werkzeug bearbeitet. Dies kann beispielsweise von Vorteil sein, wenn bei der Bearbeitung mit dem zweiten Werkstück eine Anfas- und Entgratoperation durchgeführt wird, allerdings noch ein beim Anfasen auf den Zahnflanken des Werkstücks erzeugter Sekundärgrat verbleibt. Dieser kann mit dem Werkzeug, das die Verzahnung bearbeitet/erzeugt hat, beispielsweise einem Wälzfräser, entfernt werden.

In einer besonders bevorzugten Verfahrensgestaltung erfolgen die jeweiligen Ortswechsel des Werkstücks und des weiteren Werkstücks zeitgleich und insbesondere gekoppelt. Dadurch wird weitere Bearbeitungszeit eingespart und die Anzahl der für die Ortswechsel erforderlichen Antriebe verringert.

In einer Verfahrensvariante wird ein bearbeitetes Werkstück nach dem Lösen einer Aufspannung ohne die Aufspannvorrichtung aus dem Bearbeitungsraum verbracht und/oder ein zu bearbeitendes Werkstück erst nach seinem Verbringen in den Bearbeitungsraum auf eine Aufspannvorrichtung aufgespannt. Für den Werkstückwechsel können somit Mechanismen in Form von per se bekannten Werkstückwechslern eingesetzt werden; andererseits ist es auch denkbar, das Werkstück zusammen mit seiner Aufspannvorrichtung aus dem Bearbeitungsraum zu entfernen, je nach dem für den Ortswechsel der Werkstücke im Bearbeitungsraum vorgesehenen Mechanismus.

In einer besonders bevorzugten Verfahrensgestaltung wird vorgesehen, daß ein während der Werkstückbearbeitung an einem Ort mit der Aufspannvorrichtung verbundener Verbindungsbereich der Werkstückspindel wenigstens während eines Teilintervalls eines Zeitraums zwischen dem Lösen dieser Verbindung bis zur erneuten Herstellung einer Verbindung mit einer Aufspannvorrichtung abgedeckt wird. Dadurch kann der Verbindungsbereich vor bei der Bearbeitung anfallenden Spänen geschützt werden.

Dieser Verfahrensaspekt, einen nach Lösen einer Aufspannvorrichtung von einer Werkstückspindel freiliegenden Verbindungsbereich der Werkstückspindel durch eine Abdeckung insbesondere vor dem Eindringen von bei der Bearbeitung entstandenen Spänen zu schützen, wird auch als unabhängig von der Anzahl vorgesehener Bearbeitungsspindeln als vorteilhaft und eigenständig schutzwürdig angesehen und als solches offenbart.

Die Erfindung offenbart somit eigenständig und als eigenständig schutzwürdig auch ein Verfahren zum Erzeugen und/oder Bearbeiten einer Verzahnung an einem Werkstück, bei dem das Werkstück auf einer mit einer Werkstückspindel verbundenen Aufspannvorrichtung aufgespannt in Bearbeitungseingriff mit einem Werkzeug gebracht wird, und bei dem man die Verbindung zwischen Aufspannvorrichtung und Werkstückspindel löst, wobei wenigstens während eines Zeitintervalls in dem Zeitraum zwischen dem Lösen dieser Verbindung bis zu einer erneuten Verbindung der Werkstückspindel mit einer Aufspannvorrichtung ein der Verbindung mit der Aufspannvorrichtung dienender Bereich der Werkstückspindel abgedeckt wird.

In einer zweckmäßigen Verfahrensgestaltung ist das Abdecken des Verbindungsbereichs an die ortswechselnde Bewegung des Werkstücks gekoppelt. Somit bedarf es vereinfachend keiner zusätzlichen Bewegungseinheit, um das Abdecken zu bewirken.

Für einen kollisionsfreien Bearbeitungseingriff zwischen einem Verzahnungswerkzeug und dem verzahnten Werkstück ist es erforderlich, die gegenseitige räumliche Lage zwischen dem Werkstück und dem Werkzeug richtig einzustellen. Dies erfolgt üblicherweise über eine geeignete CNC-gesteuerte Koordinierung der Drehlagen von Werkzeugachse und Werkstückspindelachse, vorausgesetzt die relative Lage des verzahnten Werkstücks zu einem Referenzpunkt auf der Werkstückspindelachse ist bekannt. Zur Bestimmung dieser Drehlage könnte an einer oder mehrerer der Arbeitsstationen ein sogenannter Indexierungsvorgang zur Bestimmung der Lage der Zahnlücke einer Verzahnung vorgesehen werden, bei dem die Verzahnung des zu bearbeitenden Zahnrades mit einem insbesondere berührungslos arbeitenden Sensor abgetastet und entsprechend auf das Abtastsignal in einer dafür programmierten Steuereinrichtung das die Drehlage (Winkelposition) darstellende Signal erzeugt wird.

Das Resultat dieses im Hause der Anmelderin auch als "Einmitten" bezeichneten Vorgangs kann jedoch aufgrund der Beibehaltung der Aufspannung vereinfachend durch Vorsehen einer an dem Werkstück oder seiner Aufspannvorrichtung sensorisch erfaßbaren Markierung erreicht werden. Dann ist zwar immer noch eine sensorische Erfassung der Markierung erforderlich, aber nicht mehr die zeitaufwendigere Bestimmung der Winkellage einer Zahnlücke der Verzahnung.

In einer besonders bevorzugten Verfahrensgestaltung ist vorgesehen, daß die jeweiligen Bearbeitungseingriffe des Werkstücks mit dem ersten und dem zweiten Werkzeug durch deren jeweilige gegenseitige räumliche Lage bestimmt sind und die Einstellung der gegenseitigen räumlichen Lage bei der zweiten Bearbeitung in Abhängigkeit der gegenseitigen räumlichen Lage bei der ersten Bearbeitung erfolgt. Dann ist eine Einmitt-Operation nicht mehr erforderlich, da sich bei der ersten Bearbeitung eine vorgegebene Winkellage einer Zahnlücke einer Verzahnung vorgeben und als bekannt abspeichern läßt, beispielsweise in einer Steuervorrichtung hinterlegt oder auch in Form einer vorgegebenen Lage einer Markierung auf der Aufspannvorrichtung. Insbesondere wird dabei ausgenutzt, daß für den Fall einer Erstbearbeitung in Form einer erstmaligen Erzeugung der Verzahnung aufgrund der Symmetrie des Werkstückrohlings eine Einmittinformation zunächst nicht erforderlich ist und durch das erstmalige Erzeugen der Verzahnung standardisiert wird.

Dieses Prinzip der Einstellung einer gegenseitigen räumlichen Lage zwischen einem verzahnten Werkstück und einem Werkzeug in Abhängigkeit der gegenseitigen räumlichen Lage zwischen dem Werkstück und einem eine frühere Bearbeitung und/oder Erzeugung der Verzahnung des Werkstücks durchführenden Werkzeuges wird ebenfalls unabhängig von den weiteren oben beschriebenen Verfahrensaspekten offenbart und als solches schutzwürdig angesehen.

Die Erfindung offenbart somit eigenständig und als eigenständig schutzwürdig ein Verfahren zum Bearbeiten eines Werkstücks, bei dem das Werkstück in zwei zeitlich aufeinanderfolgenden Bearbeitungsschritten mit zwei Werkzeugen in einen jeweils durch die gegenseitige räumliche Lage zwischen dem Werkstück und dem Werkzeug bestimmten Bearbeitungseingriff gebracht wird, das im wesentlichen dadurch gekennzeichnet ist, daß die Einstellung der gegenseitigen räumlichen Lage zwischen dem Werkstück und dem zweiten Werkzeug in dem zweiten Bearbeitungsschritt in Abhängigkeit von der gegenseitigen räumlichen Lage zwischen dem Werkstück und dem ersten Werkzeug im ersten Bearbeitungsschritt erfolgt, und dies insbesondere bei im ersten und im zweiten Bearbeitungsschritt eingesetzten verschiedenen Werkstückspindeln.

In diesem Zusammenhang kann in einer Verfahrensvariante vorgesehen werden, daß eine gegebenenfalls erfolgende Drehlagenänderung des Werkstücks während seines Ortswechsels deterministisch vorgegeben ist, beispielsweise in dem die Aufspannrichtung bezüglich der Drehlage der Werkstückspindel nur in definierten Drehlagen mit dieser verbindbar ist, z.B. durch CAPTO-Systeme. Ändert sich die absolute Drehlage der Aufspannvorrichtung aufgrund des Ortswechsels im Raum, wenn z.B. bei dem Ortswechsel ein Schwenkbewegung durchgeführt wird, so ist der Schwenkwinkel und der Abstand von der Drehachse bekannt und die absolute Änderung der Drehlage der Aufspannvorrichtung somit nachvollziehbar. In diesem Zusammenhang ist auch vorgesehen, daß zwischen dem die Aufspannvorrichtung beim Ortswechsel haltenden Halter und der Aufspannvorrichtung die relative Drehlage unverändert bleibt.

In vorrichtungstechnischer Hinsicht wird die obige Aufgabe gelöst durch eine Verzahnungsmaschine mit den Merkmalen von Anspruch 8. Neben weiteren Merkmalen ist dies eine Verzahnungsmaschine mit wenigstens zwei in einem Bearbeitungsraum angeordneten Werkzeugen zum Erzeugen und/oder Bearbeiten einer Verzahnung an einem Werkstück, wenigstens zwei Werkstückspindeln, mittels derer jeweils über eine Aufspannvorrichtung aufgespannte zu bearbeitende Werkstücke drehend, insbesondere drehend angetrieben lagerbar sind, so daß ein erstes aufgespanntes Werkstück in Bearbeitungseingriff mit einem ersten und parallel dazu ein zweites aufgespanntes Werkstück in Bearbeitungseingriff mit einem zweiten Werkzeug gebracht werden kann, die im wesentlichen gekennzeichnet ist durch einen Mechanismus zum Lösen und Herstellen einer Verbindung zwischen einer Aufspannvorrichtung und einer Werkstückspindel sowie durch eine ein Werkstück von einer Werkstückspindel unter Beibehaltung seiner Aufspannung in dem gemeinsamen Bearbeitungsraum zu einer anderen Werkstückspindel bewegende Einrichtung.

Die Vorteile der erfindungsgemäßen Verzahnungsmaschine ergeben sich aus den obigen Erläuterungen zu dem erfindungsgemäßen Verfahren.

In einer besonders bevorzugten Ausführungsform weist die Bewegungseinrichtung einen um eine Drehachse der Bewegungseinrichtung verschwenkbaren Halter für eine der Aufspannvorrichtungen auf. Es wird somit eine Drehbewegung der Bewegungseinrichtung und ein damit verbundenes Verschwenken des Halters gegenüber etwa einer Linearbewegung bevorzugt.

In diesem Zusammenhang ist bevorzugt vorgesehen, daß die Bewegungseinrichtung wenigstens einen weiteren um die Drehachse verschwenkbaren Halter für eine weitere Aufspannvorrichtung aufweist, und bei der insbesondere die Haltebewegungen über eine Kopplung zwischen den Haltern zwangsgekoppelt sind. Damit wird vorrichtungstechnisch erreicht, was oben schon erläutert wurde, nämlich die Möglichkeit eines automatischen Platztausches im Falle zweier Spindeln, bzw. das Weitertakten in die nächste Bearbeitungsposition im Falle von drei oder mehr Spindeln in zwangsgekoppelter Weise.

In diesem Zusammenhang kann diese Kopplung in Form eines gemeinsamen, um die Drehachse drehbaren Trägers für die Halter ausgebildet sein. Mit anderen Worten sind die Halter als Haltebereiche des Trägers ausgebildet. Die Haltewirkung der Aufspannvorrichtungen durch die Halter ist während der Bearbeitungseingriffe deaktiviert. Der Träger nimmt daher während der Bearbeitung auch keine Bearbeitungskräfte auf, so daß keine besonderen Maßnahmen zu dessen ortsfester Lagerbarkeit erforderlich sind.

Zu deren Aktivieren kann die Bewegungseinrichtung einen Halter/den Träger mit Bewegungskomponente parallel zu wenigstens einer Werkstückspindelachse bewegen. In einer bevorzugten Ausführungsform sind die zwei Spindelachsen parallel zueinander angeordnet und der Träger führt eine entlang der Werkstückspindelachsen gerichtete Hubbewegung aus. Letztere bewirkt insbesondere die Haltewirkung der Halter/Haltebereiche mit den Aufspannvorrichtungen und insbesondere auch das Trennen der Aufspannvorrichtungen von den Werkstückspindeln.

In einer besonders bevorzugten Ausführungsform weist die Verzahnungsmaschine eine Abdeckeinrichtung auf, welche einen während der Werkstückbearbeitung an einem Ort mit der Aufspannvorrichtung verbundenen Verbindungsbereich der Werkstückspindel wenigstens während eines Teilintervalls eines Zeitraums zwischen dem Lösen dieser Verbindung durch den Verbindemechanismus bis zur erneuten Herstellung einer Verbindung mit einer Aufspannvorrichtung abdeckt.

Dieser den Verbindungsbereich vor Spänen schützende Aspekt der Erfindung wurde oben bereits erläutert und ist auch in vorrichtungstechnischer Hinsicht unabhängig und eigenständig schutzwürdig zu sehen.

Die Erfindung offenbart somit eigenständig und als eigenständig schutzwürdig auch eine Verzahnungsmaschine mit wenigstens einem in einem Bearbeitungsraum angeordneten Werkzeug zum Erzeugen und/oder Bearbeiten einer Verzahnung an einem Werkstück, wenigstens einer Werkstückspindel, mittels der ein über eine Aufspannvorrichtung aufgespanntes zu bearbeitendes Werkstück drehend, insbesondere drehend angetrieben lagerbar ist, mit einem Mechanismus zum Lösen und Herstellen einer Verbindung zwischen der Aufspannvorrichtung und der Werkstückspindel und mit einer Abdeckeinrichtung, welche einen während der Werkstückbearbeitung mit der Aufspannvorrichtung verbundenen Verbindungsbereich der Werkstückspindel wenigstens während eines Teilintervalls eines Zeitraums zwischen dem Lösen dieser Verbindung durch den Verbindemechanismus bis zur erneuten Herstellung einer Verbindung mit einer Aufspannvorrichtung abdeckt.

In einer besonders bevorzugten Ausführungsform ist die Abdeckeinrichtung mit einem Halter bewegungsgekoppelt und bildet insbesondere ein Teil des Trägers. Dadurch wird die Abdeckwirkung in besonders einfacher Weise erreicht.

Grundsätzlich fordert der Hauptaspekt der Erfindung, daß die Werkstückspindeln den Ortswechsel der Werkstücke nicht mitvollziehen, eine Veränderung der absoluten Lage der Werkstückspindeln gegenüber beispielsweise einem Maschinenbett ist jedoch nicht ausgeschlossen. Besonders bevorzugt sind die Werkstückspindeln jedoch bezüglich der Verzahnungsmaschine raumfest angeordnet. Hinsichtlich der Orientierung der Werkstückspindelachsen unterliegt die Erfindung ebenfalls keinen besonderen Einschränkungen, insbesondere können beispielsweise horizontal verlaufende Werkstückspindeln vorgesehen werden, insbesondere für die Bearbeitung wellenförmiger Werkstücke. In einer besonders bevorzugten Ausführungsform verlaufen die Werkstückspindelachsen jedoch vertikal, und eine Drehachse für den den Ortswechsel vermittelnden Träger insbesondere ebenfalls vertikal.

Zweckmäßig sind die Werkstückspindeln in einem gemeinsamen Maschinenbett gelagert. Auf diese Weise wird die Erhöhung die Gesamtsteifigkeit in besonders einfacher Weise erreicht.

Für die Ausgestaltung der Drehbewegung der Bewegungseinrichtung sind zwei Varianten denkbar. So kann die Bewegungseinrichtung zu einem Richtungswechsel der von ihr bewirkten Drehbewegungen ausgelegt und ansteuerbar sein. Für das Beispiel einer Realisierung mit drei Spindeln (erste Spindel einer Wälzfräsposition zugeordnet, zweite Spindel einer Anfas-/und Entgratstation zugeordnet, dritte Spindel einer Be- und Entladestation zugeordnet) könnte in diesem Beispiel ein Werkstück nach dem Beladen in der Be- und Entladestation zum Wälzfräsen verbracht werden, unter Beibehaltung der Drehrichtung zum Anfasen und Entgraten, unter Umkehr der Drehrichtung zurück zur Frässtation (zweiter Fräsdurchgang, Entfernen von Sekundärgraten auf den Zahnflanken).

Alternativ und ebenfalls bevorzugt kann jedoch vorgesehen werden, daß die Bewegungseinrichtung den Träger immer nur in der gleichen Drehrichtung weitertaktet. Eine Steuervorrichtung kann jedoch auch dazu ausgelegt sein, wahlweise die eine oder die andere Variante vorzugeben.

In einer Be- und Entladestation, in der die Werkstücke in den Bearbeitungsraum verbracht und daraus entfernt werden, können in einer Position vorgenommen werden, in der auch eine Bearbeitung stattfindet, oder an einer eigenen Station. Dabei ist bevorzugt vorgesehen, daß die Aufspannung eines Werkstückes auf einer sich in mit einer Werkstückspindel verbundenem Zustand befindlichen Aufspannvorrichtung lösbar ist, insbesondere über einen innerhalb des Verbindemechanismus geschaffenenen Betätigungszugang. Dies erlaubt den Einsatz per se bekannter Werkstückwechsler und insbesondere eine kompakte Anordnung eines Trägers, dessen Haltebereiche die Aufspannvorrichtungen wenigstens zum Teil (umfangsmäßig bevorzugt mehr als 180°) umgeben.

Dabei kann vorgesehen werden, den Betätigungszugang nur in der Be- und Entladeposition zu schaffen, und zur Vereinfachung an den anderen Bearbeitungsstationen nicht.

In einer bevorzugten Ausführungsform kann vorgesehen werden, daß der Träger zusätzlich ein mit wenigstens einem der der Werkstückbearbeitung dienenden Werkzeuge in Bearbeitungseingriff bringbares Werkzeug trägt. Dies ist insbesondere für den Fall abrichtbarer Bearbeitungswerkzeuge wie abrichtbarer Schleifschnecken oder Schleifscheiben von Vorteil, indem ein Abrichtwerkzeug über die Bewegungseinrichtung mit den abrichtbaren Schleifwerkzeugen in Eingriff gebracht werden kann.

In einer möglichen Ausführungsform ist eine Aufspannvorrichtung mit wenigstens einer Markierung versehen, über die ihre relative Drehlage bezüglich der Werkstückspindel sensorisch erfaßbar ist. Die damit erreichbaren Vorteile sind bereits oben anhand des Verfahrens beschrieben worden.

In diesem Zusammenhang wird bevorzugt vorgesehen, daß der Verbindemechanismus die Verbindung einer Aufspannvorrichtung und einer Werkstückspindel in nur einer oder einer Mehrzahl definierter relativer Drehlagen erlaubt, insbesondere über einen in Umfangsrichtung wirkenden Formschluß und/oder eine während des Ortswechsels bewirkte Drehlagensicherung zwischen Halter und Aufspannvorrichtung. Hinsichtlich der Verbindung zwischen Aufspannvorrichtung und Werkstückspindel sind Systeme, die dies leisten, bereits per se bekannt, beispielsweise CAPTO-Systeme.

Eine Steuervorrichtung der Verzahnungsmaschine ist bevorzugt dazu ausgelegt und betreibbar, eine Verzahnungsmaschine nach einem Verfahren gemäß einem der oben genannten Verfahrensaspekte zu steuern.

Dabei ist insbesondere vorgesehen, daß die Steuervorrichtung eine Information über die gegenseitige räumliche Lage zwischen einem Werkstück und einem eine Bearbeitung ausführendem Werkzeug erfaßt und diese für eine nachfolgende Bearbeitung mit einem anderen Werkzeug verfügbar hält. Insbesondere kann sich die Erfassung der gegenseitigen räumlichen Lage auf die bei der Erzeugung der Verzahnung bewirkende Bearbeitung beziehen.

In einer besonders bevorzugten Ausführungsform ist das erste Werkzeug ein Wälzfräser, das zweite Werkzeug ein Anfas- und/oder Entgratwerkzeug.

Die Be- und Entladestation kann dann entweder mit der für das Anfasen und Entgraten vorgesehenen Station übereinstimmen, es kann jedoch auch eine dritte Werkstückspindel für das Be- und Entladen vorgesehen werden.

In einer bevorzugten weiteren Gestaltung ist ein drittes Werkzeug in Form eines Schabwerkzeugs im Bearbeitungsraum vorgesehen, dem eine dritte Werkstückspindel zugeordnet ist. Bei dieser Ausführungsform kann die Be- und Entladeposition mit der Schab-Bearbeitungsposition übereinstimmen, oder am Ort einer zusätzlichen vierten Werkstückspindel vorgesehen werden.

Das erfindungsgemäße Verfahren und die erfindungsgemäße Verzahnungsmaschine eignen sich zur Bearbeitung von Werkstücken in Form von Zahnrädern, jedoch auch zur Bearbeitung von Werkstücken in Form einer Welle, die Verzahnungen aufweisen soll. Für diesen Fall kann vorgesehen werden, daß die Verzahnungsmaschine noch eine Reitstockanordnung aufweist.

In diesem Zusammenhang ist insbesondere bevorzugt vorgesehen, daß die Reitstockanordnung mit der Bewegungseinrichtung gekoppelt ist, und insbesondere an dem Träger angeordnet ist. Insbesondere ist bevorzugt vorgesehen, daß ein Reitstock eine der Anzahl der Aufspannvorrichtungen entsprechende Anzahl Reitstockspitzen aufweist, die diesen zugeordnet sind und die voneinander unabhängig in Richtung der Werkstückspindeln verfahren werden können. Des weiteren kann vorgesehen werden, daß die Reitstockspitzen eine in Richtung der Werkstückspindelachsen auf die Wellen wirkende Druckkraft während des Ortswechsels der Wellen ausüben können, die während der Bearbeitung der Wellen deaktivierbar ist.

Dieser Aspekt der Erfindung wird ebenfalls als eigenständig offenbart und als eigenständig schutzfähig angesehen.

Die Erfindung offenbart somit eigenständig und als eigenständig schutzfähig auch eine Reitstockanordnung für eine Verzahnungsmaschine insbesondere nach einer der vorstehend beschriebenen Ausführungen, die zu einer drehbaren Lagerung und insbesondere gegenüber der drehbaren Lagerung axial beweglich einbaubar ist und wenigstens zwei Reitstockspitzen sowie spindelstockseitig den Reitstockspitzen gegenüberliegend Haltebereiche zum Halten einer der Anzahl der Reitstockspitzen entsprechenden Zahl von Aufspannvorrichtungen für insbesondere wellenförmige Werkstücke aufweist, bei denen insbesondere ein axialer Abstand zwischen einer Reitstockspitze und dem ihr zugeordneten Haltebereich insbesondere unabhängig von den anderen axialen Abständen änderbar ist, und/oder bei der eine Reitstockspitze in einer ersten Funktionsstellung eine axial in Richtung auf den ihr zugeordneten Haltebereich wirkende Spannkraft ausüben kann, die in einer zweiten Funktionsstellung einen geringeren Wert annehmen kann oder ganz deaktivierbar ist.

Die axial in Richtung auf den Haltebereich wirkende Spannkraft ist als eine (zusätzliche) unabhängig von einer über eine Einstellung des axialen Abstands erreichte Spannkraft ausübbare Spannkraft anzusehen, die insbesondere durch eine deaktivierbare Federanordnung realisierbar ist.

Weitere Merkmale, Einzelheiten und Vorteile der Erfindung ergeben sich aus der nachfolgenden Beschreibung mit Bezug auf die beiliegenden Figuren, von denen
- Fig. 1: eine schematische perspektivische Darstellung von Bereichen einer erfindungsgemäßen Verzahnungsmaschine zeigt,
- Fig. 2: einen Axialschnitt der Darstellung von Fig. 1 zeigt,
- Fig. 3: einen Fig. 2 entsprechenden Axial-schnitt, aber in einer anderen Betriebsstellung zeigt,
- Fig. 4: eine axiale Schnittansicht eines Bereichs aus Fig. 2 zeigt,
- Fig. 5: Bereiche einer Verzahnungsmaschine gemäß einer weiteren Ausführungs-form der Erfindung zeigt,
- Fig. 6: Bereiche einer Verzahnungsmaschine einer nochmals weiteren Ausführungs-form der Erfindung zeigt,
- Fig. 7: eine Reitstockanordnung zeigt, und
- Fig. 8: einen einem Bereich von Fig. 7 entsprechenden Bereich in einem Axial-schnitt zeigt.

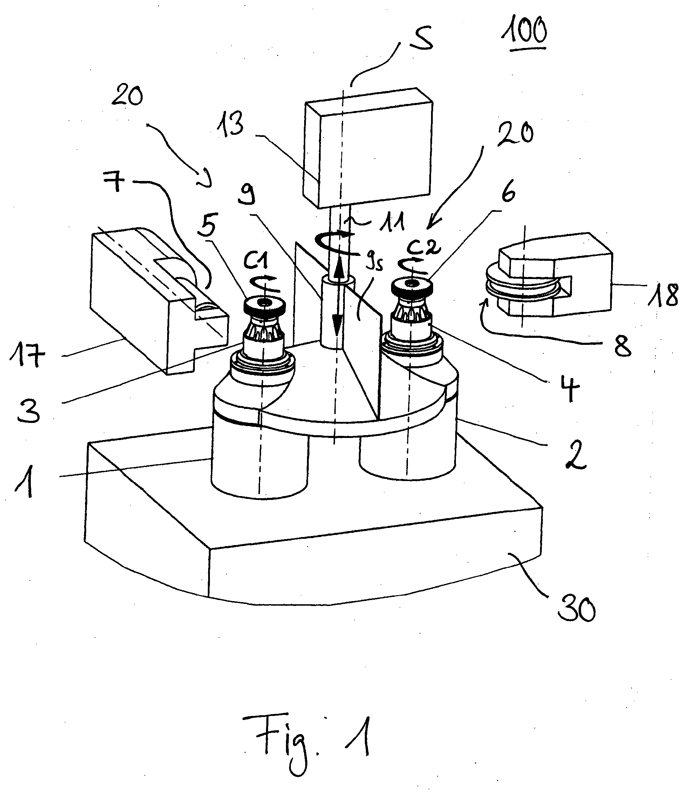

Fig. 1 zeigt in einer schematisch vereinfachten perspektivischen Darstellung eine erste Ausführungsform der Erfindung. Die darin nur in Teilen dargestellte Verzahnungsmaschine 100 ist zum Wälzfräsen und auch für eine kombinierte Anfas- und Entgratoperation verzahnter Werkstücke ausgelegt. Dazu weist die Verzahnungsmaschine 100 einen Fräsekopf mit Werkzeughalter 17 auf, in dem ein schematisch dargestellter Wälzfräser 7 drehbar angetrieben gelagert ist. Obschon in der Darstellung von Fig. 1 nicht ersichtlich, sind zur Einstellung der räumlichen Lage des Wälzfräsers 7 die üblichen beim Wälzfräsen eingesetzten Maschinenachsen vorgesehen, die hier eine vertikale Verfahrbarkeit, eine horizontale Verfahrbarkeit für eine radiale Zustellbewegung, eine Verschenkbarkeit der Drehachse des Wälzfräsers 7 bevorzugt um die Zustellachse, sowie eine Shiftbewegung des Wälzfräsers entlang seiner Drehachse umfassen.

Der Bearbeitungsraum 20 der Verzahnungsmaschine 100 erstreckt sich bis hin zu einem Anfas-/Entgratwerkzeug 8, welches drehbar in einer Halterung 18 gelagert ist. Dem Anfas-/Entgratwerkzeug stehen ebenfalls die üblichen Bewegungsachsen zur Verfügung, die wenigstens eine radiale Zustellachse sowie eine vertikale Bewegungsachse umfassen.

Unterhalb des zwischen dem Wälzfräser 7 und dem Anfas-/Entgratwerkzeug 8 gebildeten Bearbeitungsraum 20 der Verzahnungsmaschine 100 ist ein Bereich 30 eines Maschinenbettes der Verzahnungsmaschine 100 angeordnet, in dem zur Seite des Wälzfräsers 7 eine erste Werkstückspindel 1 und zur Seite des Anfas-/Entgratwerkzeugs 8 eine zweite Werkstückspindel 2 angeordnet ist. Diese gegenüber dem Bereich 30 hinsichtlich der räumlichen Lage ihrer jeweiligen Spindelachsen C1 und C2 raumfesten Werkstückspindeln 1 und 2 können beispielsweise über Direktantriebe in Drehung versetzt werden, bevorzugt CNC-gesteuert über jeweils einen Direktantrieb.

Die erste Werkstückspindel 1 und der Wälzfräser 7 bilden somit eine erste Bearbeitungsstation, und die zweite Werkstückspindel 2 bildet mit dem Anfas-/Entgratwerkzeug 8 eine zweite Bearbeitungsstation der Verzahnungsmaschine 100. In der ersten Bearbeitungsstation wird eine Verzahnung an einem in Fig. 1 auf einer ersten Aufspannvorrichtung 3 aufgespannten Werkstück 5 durch Wälzfräsen erzeugt, die mit der ersten Werkstückspindel 1 während des Bearbeitungseingriffes zwischen Wälzfräser 7 und Werkstück 5 drehfest verbunden ist. In der zweiten Bearbeitungsstation wird ein bereits mit Verzahnung versehenes zweites Werkstück 6 in Fig. 1 in Bearbeitungseingriff mit dem Anfas-/Entgratwerkzeug 8 gebracht. Dazu ist das zweite Werkstück 6 auf einer zweiten Aufspannvorrichtung 4 aufgespannt, die während des Bearbeitungseingriffs drehfest mit der zweiten Werkstückspindel 2 verbunden ist. In dem Bearbeitungsraum 20 ist somit eine zeitparallele Wälzfräsbearbeitung des Werkstücks 5 und eine Anfas- und Entgratoperation am zweiten bereits verzahnten Werkstück 6 durchführbar.

Nach vollständiger Bearbeitung eines Werkstücks wird dieses bevorzugt an der zweiten Bearbeitungsstation aus dem Bearbeitungsraum 20 entfernt, beispielsweise durch eine per se bekannte nicht dargestellte Werkstückwechseleinrichtung, die das Werkstück nach Lösen seiner Aufspannung greift und es durch ein noch unbearbeitetes Werkstück ersetzt.

Um das erste Werkstück 5 nach Erzeugung seiner Verzahnung von der ersten Bearbeitungsposition in die zweite Bearbeitungsposition zu verbringen, wird es unter Beibehaltung seiner Aufspannung auf der ersten Aufspannvorrichtung 3 mittels eines Trägers 9 zu der zweiten Bearbeitungsposition verbracht. Anders als im Stand der Technik nimmt der Träger 9 bei diesem Positionswechsel des Werkstückes 5 jedoch die erste Werkstückspindel 1 nicht mit. Vielmehr bleibt die erste Werkstückspindel 1 in dem Bereich 30 des Maschinenbettes zurück.

Dazu ist der Träger 9 über eine Hub- und Drehstange 11 axial parallel zu den Werkstückspindelachsen beweglich, wie durch den doppelseitigen Pfeil in Fig. 1 angedeutet. Des weiteren kann er eine Drehbewegung um die Achse S ausführen. Die für diese beiden Bewegungen erforderlichen Antriebe sind in Fig. 1 nicht dargestellt, sie können jedoch in der bezüglich des Bereiches 30 raumfest an der Verzahnungsmaschine 100 vorgesehenen Aufnahme 13 vorgesehen werden, in welche die Hub- und Drehstange 11 einziehbar ist.

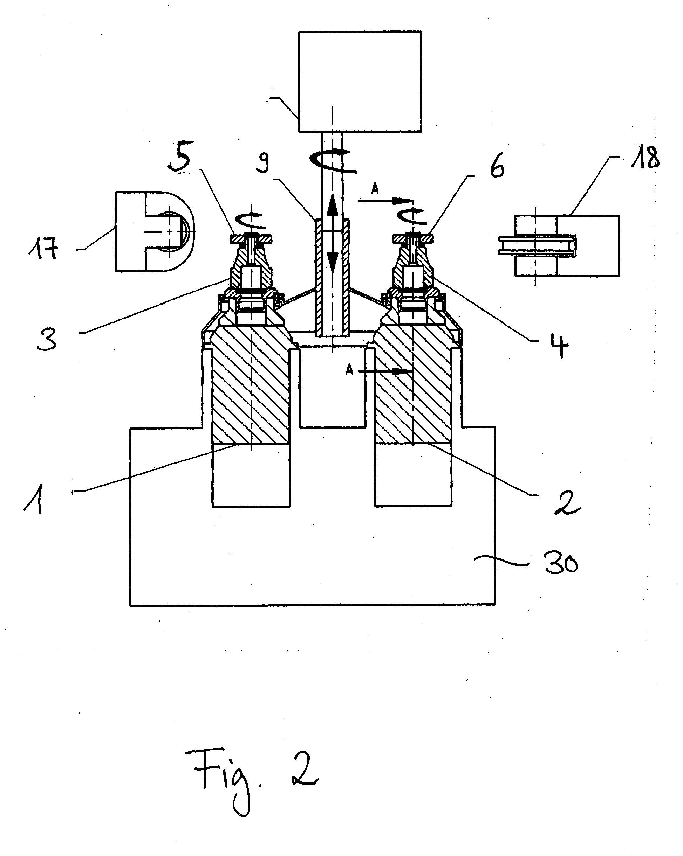

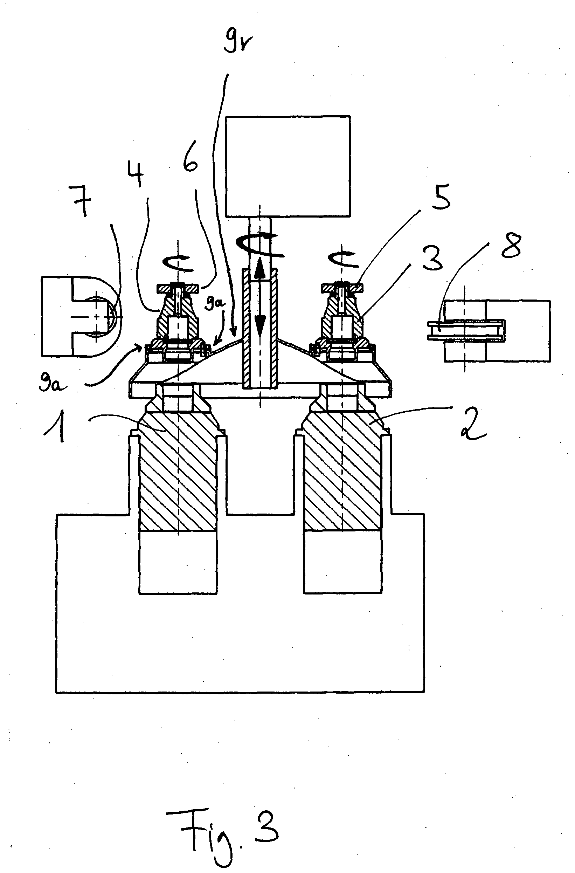

Für einen Platztausch des ersten Werkstücks 5 mit dem zweiten Werkstück 6 oder mit einem anstelle des zweiten Werkstücks 6 aufgespannten Werkstückrohlings wird zunächst durch eine Hubbewegung des Trägers 9 ein Abstand zwischen der ersten Aufspannvorrichtung 3 und der ersten Werkstückspindel 1 sowie zwischen der zweiten Aufspannvorrichtung 4 und der zweiten Werkstückspindel 2 geschaffen, nachdem deren Verbindung gelöst wurde, beispielsweise durch Freigabe des HSK von in den Werkstückspindeln verbauten Spannzangen, die die Aufspannvorrichtungen im verbundenen Zustand in einen Kegel bzw. gegen eine Plananlage des HSK ziehen. Der Hub der Hubbewegung ist dabei wenigstens so groß, daß nachfolgend ein Verschwenken der Aufspannvorrichtungen 3, 4 durch Drehung des Trägers 9 um die Achse S ohne Kollision zwischen den Aufspannvorrichtungen und den Spindelachsen erfolgen kann, wie besser aus den Schnittansichten der Figuren 2 und 3 erkennbar ist. Nach einer Drehbewegung des Trägers 9 um 180° wird der Träger 9 wieder abgesenkt und eine Verbindung zwischen der zweiten Aufspannvorrichtung 4 und der ersten Werkstückspindel 1 sowie der ersten Aufspannvorrichtung 3 und der zweiten Werkstückspindel 2 hergestellt. Anschließend kann das erste Werkstück 5 in der zweiten Bearbeitungsposition in Bearbeitungseingriff mit dem Anfas-/Entgratwerkzeug 8 gebracht werden, während das auf der zweiten Aufspannvorrichtung 4 aufgespannte Werkstück von dem Wälzfräser 7 bearbeitet werden kann.

In diesem Ausführungsbeispiel mit zwei Werkstückspindeln und einer Wälzfrässtation sowie einer Anfas- und Entgratstation ist ein Verfahrensablauf denkbar, bei dem jedes Werkstück die erste Bearbeitungsstation nur einmal durchläuft, also eine Sequenz "Aufspannen in der zweiten Bearbeitungsposition, Bewegen in die erste Bearbeitungsposition, Wälzfräsen in der ersten Bearbeitungsposition, Bewegen in die zweite Bearbeitungsposition, Bearbeitung in der zweiten Bearbeitungsposition sowie Verlassen des Bearbeitungsraums 20" durchläuft. Es kann jedoch auch vorgesehen werden, die Werkstücke vor ihrem Entfernen aus dem Bearbeitungsraum 20 nochmals zu der ersten Bearbeitungsstation zu verbringen, in der der Wälzfräser 7 einen nochmaligen Wälzfrässchritt vornimmt, bei dem bei gleichbleibender oder nochmals gegebenenfalls tieferer Zustellung gegebenenfalls die durch das Anfasen auf den Zahnflanken entstandenen Sekundärgrate entfernt werden. In diesem Fall wird die Verbindung zwischen der Aufspannvorrichtung, auf der das Werkstück aufgespannt ist, und einer Werkstückspindel insgesamt viermal gelöst und mit der jeweils anderen Werkstückspindel verbunden.

In Fig. 2 ist in einem durch die Drehachse S und die Werkstückspindelachsen C1, C2 genommenen Schnitt eine Betriebsstellung der Aufspannvorrichtungen 3, 4 und des Trägers 9 dargestellt, die bei der Bearbeitung der Werkstücke 5, 6 durch die Werkzeuge 7, 8 eingenommen wird. In Fig. 3 ist der Träger 9 dagegen in einer angehobenen Betriebsstellung dargestellt. In dieser sind die Verbindungen zwischen den Aufspannvorrichtungen und den Werkstückspindeln gelöst und ein Platztausch der auf ihren Aufspannvorrichtungen aufgespannten Werkstücke durch Drehung des Trägers 9 durchführbar und bereits durchgeführt, so daß ein Absenken des Trägers 9 in der in Fig. 3 abgebildeten Drehlage dazu führt, daß die erste Aufspannvorrichtung 3 mit der zweiten Werkstückspindel 2 sowie die zweite Aufspannvorrichtung 4 mit der ersten Werkstückspindel 1 verbunden wird.

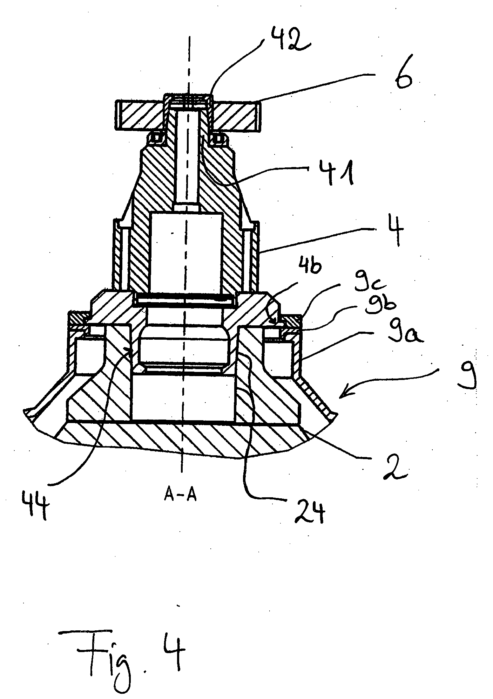

Fig. 4 zeigt noch eine entlang der Linie A-A aus Fig. 2 genommene Schnittansicht, die die Verbindung zwischen der zweiten Aufspannvorrichtung 4 und der zweiten Werkstückspindel 2 in vergrößerter Darstellung zeigt. Darin ist zunächst erkennbar, daß die zweite Werkstückspindel 2 eine zu ihrer Rotationsachse koaxiale, kegelstumpfmantelförmige Innenfläche 24 an ihrer der Werkstückaufspannung zugewandten Seite aufweist, die sich in Richtung auf die Aufspannvorrichtung 4 konisch erweitert. Die Aufspannvorrichtung 4 weist eine zu der Innenfläche 24 komplementäre kegelstumpfmantelförmige Außenfläche 44 an ihrem werkstückaufspannungsfernen Ende auf. Diese Außenfläche 44 bildet mit der Innenfläche 24 in dem in Fig. 4 dargestellten Zustand einen Paßsitz. Eine Drehlagensicherung dieser Verbindung kann beispielsweise durch in Fig. 4 nicht dargestellte Kopplungen zwischen in Umfangsrichtung gesehen von der Rotationssymmetrie abweichenden Bereichen der Aufspannvorrichtung mit dazu an der Werkstückspindel vorgesehenen komplementären Nutensteinen hergestellt werden.

Das werkstücknahe Ende der Aufspannvorrichtung 4 weist für die Aufspannung des Werkstücks 6 einen zu seiner Rotationsachse koaxialen Spannkonus 41 auf, auf dessen kegelstumpfmantelförmiger Außenfläche eine Expandierhülse 42 angeordnet ist, deren Innenfläche komplementär zu der Außenfläche des Spannkonus 41 ausgebildet ist. Durch diese Anordnung läßt sich die Expandierhülse 42 zwischen einem radial kontrahierten Zustand und einem radial expandierten Zustand verstellen, indem sie gegenüber dem Spannkonus axial verschoben wird. Natürlich können anstelle des Spannkonus 41 auch andere dem Fachmann bekannte Mittel zur Änderung des Radius der Expandierhülse vorgesehen werden.

In der in Fig. 2 dargestellten Arbeitsstellung ist die Werkstückspindel 2 nebst der Aufspannvorrichtung 4 mit Spiel drehbar gegenüber dem Träger 9 durch eine Öffnung in dem Träger 9 geführt, die von einem Umrandungsbereich 9a desselben begrenzt wird. Die Ausgestaltung des Bereichs 9a über einen beim Anheben der Aufspannvorrichtung 4 eine Haltekraft auf diese ausübenden Bereiches 9b (Fig. 4) sowie eines endseitigen Flanschbereiches 9c, der sich über den äußersten radialen Flansch 4b der Aufspannvorrichtung 4 erstreckt, beeinträchtigen die Werkstückspindeldrehung während der Bearbeitung nicht und verhindern ein Eindringen von Spänen und gegebenenfalls Kühl- und/oder Schmierstoffen.

Wenigstens an einer Bearbeitungsposition, im beispielhaft dargestellten Fall an der zweiten Werkstückspindel 2, ist ein nicht dargestellter Betätigungsmechanismus vorgesehen, mit dem das Werkstück 6 auf die/von der Aufspannvorrichtung 4 über die Radiusänderung der Expandierhülse aufspannbar bzw. abspannbar ist.

Bei dem beschriebenen Ausführungsbeispiel entspricht der Ortswechsel eines Werkstücks einem Weitertakten des Trägers durch Drehung um 180°, da zwei Werkstückspindeln vorgesehen sind. Es können jedoch auch drei oder mehrere Werkstückspindeln vorgesehen sein, mit entsprechend vielen Aufspannungsvorrichtungen, welche durch Drehung um 360°/n weitergetaktet werden, wobei n die Anzahl der vorgesehenen Spindeln bezeichnet. So könnte beispielsweise zusätzlich zu der in Fig. 1 dargestellten Variante eine dritte Werkstückspindel vorgesehen sein, die an einem dritten Ort für das Be- und Entladen vorgesehen ist, d.h. um ein Werkstück in den Bearbeitungsraum 20 zu verbringen und daraus zu entfernen. Es ist auch beispielsweise denkbar, einen Bearbeitungsraum mit vier Spindeln vorzusehen, bei dem funktionsmäßig die beiden anhand von Fig. 1 beschriebenen Bearbeitungsstationen vorhanden sind, jedoch nicht diametral gegenüberliegend, sondern lediglich um 90° versetzt, und zwei weitere Stationen, an deren eine ein Schabwerkzeug in Bearbeitungseingriff mit dem Werkstück gebracht werden kann, während an der weiteren be- und entladen wird. Dies erlaubt die Bearbeitungsreihenfolge Beladen-Wälzfräsen-Anfasen/Entgraten-Schaben-Entladen.

Wie aus der obigen Beschreibung erkennbar ist, reicht für die Funktion des Ortswechsels hinsichtlich der Gestaltung des Trägers 9, daß dieser den in Fig. 3 erkennbaren Berandungsbereich 9a sowie eine Verbindung von diesem zu der Drehachse S in Form eines sich radial erstreckenden Bereiches 9r aufweist (Fig. 3). In der dargestellten Ausführungsform erstreckt sich der Träger 9 von der Achse S in einer Draufsicht dagegen nicht nur in Richtung auf die Berandungsbereiche 9a, sondern in alle Richtungen, da ein im wesentlichen scheibenförmiger Trägerkörper 9 gebildet ist. Dabei reicht die radiale Erstreckung so weit, daß jedenfalls der zwischen den Innenflächen 24 der Werkstückspindel 2 (und auch der diesbezüglich gleichartig gebildeten Werkstückspindel 1) liegende Raum während einer Drehung des Trägers 9 abgedeckt bleibt. Auf diese Weise können während der Positionswechsel der Werkstücke nebst Aufspannvorrichtungen keine Späne in diesen Raum eindringen. Des weiteren ist in der gezeigten Ausführungsform vorgesehen, daß der Träger 9 eine den Späneflug während der Bearbeitung einschränkende vertikale Trennwand 9s aufweist (Fig. 1).

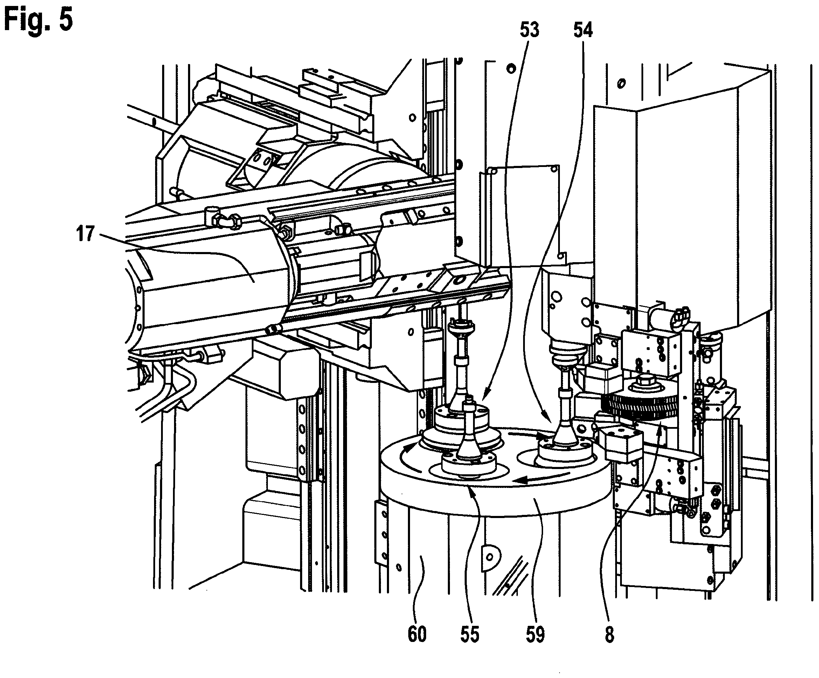

In Fig. 5 ist eine weitere Ausführungsform der Erfindung gezeigt. Bei dieser Ausführungsform sind drei Werkstückspindeln in einer Basis 60 einzeln drehbar gelagert und werden z.B. von entsprechenden Direktantrieben angetrieben. Dem Träger 9 aus Fig. 1 entspricht in Fig. 5 der Träger 59, der vor dem Weitertakten eine Hubbewegung gegenüber der Basis 60 ausführt und dabei die Aufspannvorrichtungen 53, 54 und 55 von den drei Werkstückspindeln löst. Im Gegensatz zu der Ausführungsform gemäß Fig. 1 ist allerdings sowohl die dafür vorgesehene Hubeinrichtung als auch der Drehmechanismus zum Weitertakten des Trägers 59 nicht oberhalb, sondern unterhalb des Trägers 59 angeordnet, nämlich in der Basis 60.

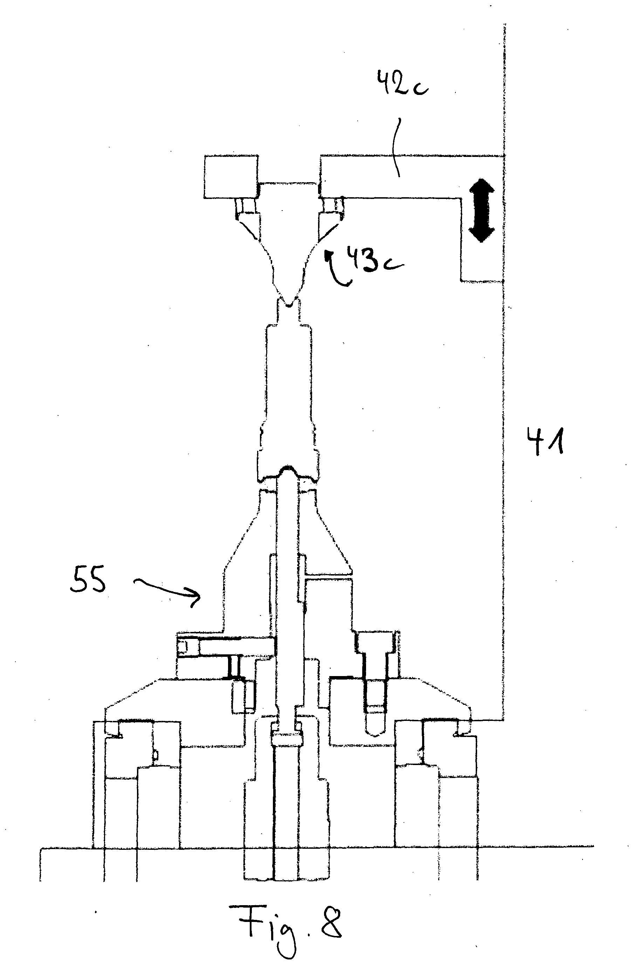

Zudem sind die Aufspannvorrichtungen 53, 54 und 55 (Fig. 8) für das Aufspannen von wellenförmigen Werkstücken geeignet. Das Grundprinzip des Weitertaktens ist allerdings das gleiche, die Werkstücke werden auf den Aufspannvorrichtungen 53, 54 und 55 aufgespannt in die jeweils nächste Position getaktet, ohne die Werkstückspindeln dabei mitzunehmen. In der in Fig. 5 dargestellten Momentaufnahme ist die Aufspannvorrichtung 53 in der Bearbeitungsposition, in der der Wälzfräser arbeitet, sowie die Aufspannvorrichtung 54 in der dem Anfas- und Entgratwerkzeug 8 zugeordneten Arbeitsstation zu sehen, während sich die Aufspannvorrichtung 55 in einer Position befindet, in der die Werkstücke gewechselt werden können, d.h. ein bearbeitetes Werkstück aus dem Bearbeitungsraum der Maschine verbracht wird und an dessen Stelle ein unbearbeitetes Werkstück aufgespannt wird.

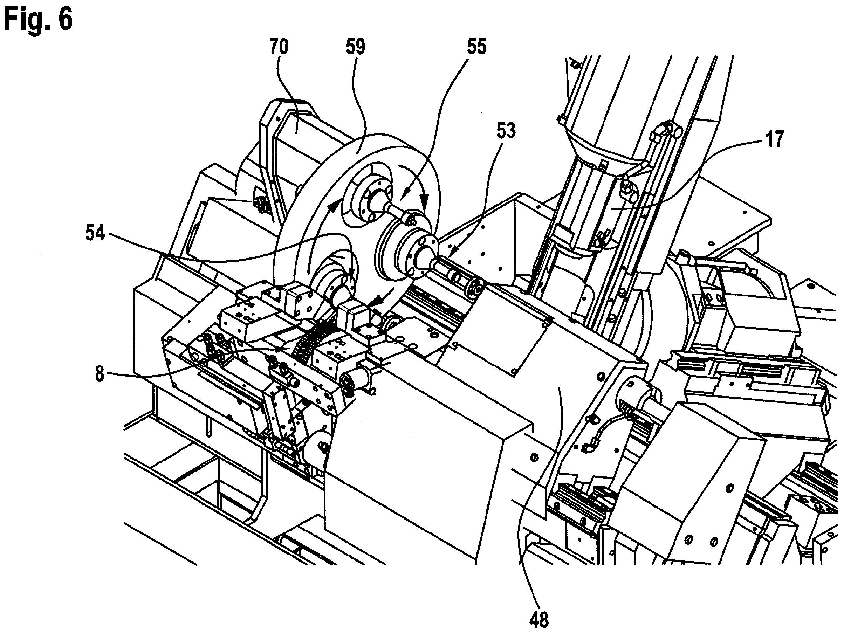

Fig. 6 zeigt eine weitere Ausführungsform, in der eine Wälzfräsmaschine als horizontale Wälzfräsmaschine ausgeführt ist. Entsprechend verlaufen die Werkstückspindelachsen horizontal. Auch verläuft auch die Relativbewegung des Trägers 59 gegenüber dem die Werkstückspindeln aufnehmenden Maschinenbereich 70 horizontal wie auch die Drehachse für das Weitertakten des Trägers 59.

Dem Maschinenbereich 70 gegenüberliegend ist eine Reitstockanordnung 48 vorgesehen, die eine der Anzahl der Werkstückspindeln entsprechende Anzahl von Reitstockspitzen aufweist, wie üblicherweise bei der Bearbeitung wellenförmiger Werkstücke vorgesehen.

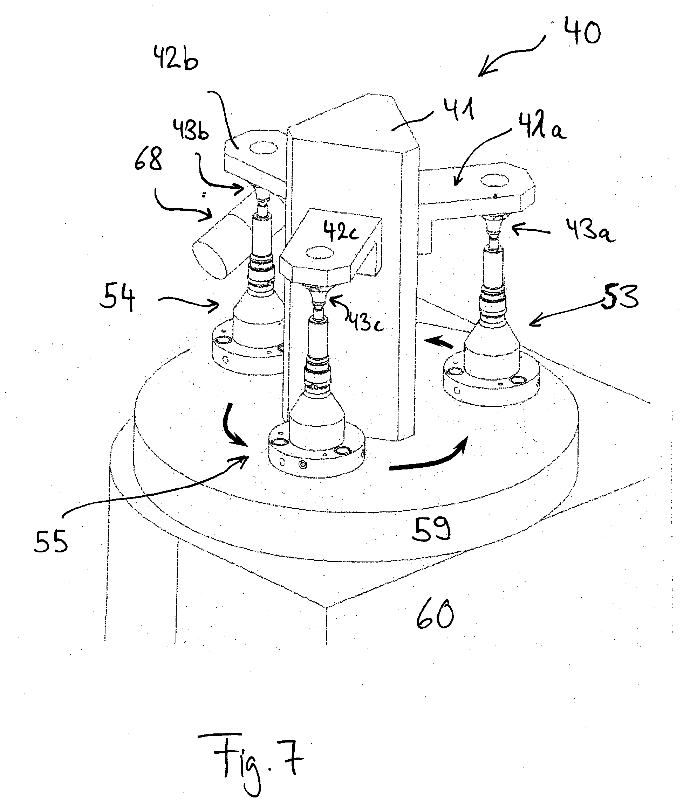

In der in Fig. 7 dargestellten Ausführungsform ist dagegen eine Reitstockanordnung 40 drehfest mit dem Träger 59 verbunden. Die Reitstockanordnung 40 weist einen sich in Richtung der Drehachse des Trägers 59 erstreckenden Reitstockstamm 41 auf, der im Querschnitt beispielsweise die Form eines Polygons entsprechend der Anzahl der verwendeten Werkstückspindeln aufweisen kann. In dem Ausführungsbeispiel von Fig. 7 mit drei Werkstückspindeln und drei Aufspannvorrichtungen 53, 54 und 55 ist der Querschnitt des Reitstockstammes 41 im wesentlichen dreieckig. An den jeweiligen Seitenflächen ragen Ausleger 42a, 42b und 42c radial nach außen, an denen die jeweiligen, den Aufspannvorrichtungen 53, 54 und 55 fest zugeordneten und zugewandten Reitstockspitzen 43a, 43b und 43c angeordnet sind.

Wie in Fig. 8 durch den doppelseitigen Pfeil angedeutet ist, sind die Ausleger 42a, 42b und 42c jeweils unabhängig voneinander mit Bewegungsrichtungskomponente in axialer Werkstückspindelrichtung gegenüber dem Reitstockstamm 41 beweglich angeordnet. Auf diese Weise kann trotz der steifen Verbindung zwischen Reitstockstamm 41 und Drehträger 59 beispielsweise das auf in Fig. 7 auf der Aufspannvorrichtung 55 aufgespannte Werkstück gewechselt werden, indem die Reitstockspitze 43c angehoben wird, während zeitparallel die an den anderen Aufspannvorrichtungen 53 (Bearbeitungswerkzeug nicht dargestellt) und 54 (Bearbeitungswerkzeug 68, beispielsweise Schleifschnecke zum Schlichten von in der vorherigen Bearbeitungsposition geschruppter Werkstücke) aufgespannten Werkstücke zeitparallel bearbeitet werden können.

Während des Weitertaktens werden die Reitstockspitzen 43a, 43b und 43c gegen ihr jeweiliges Werkstück gepreßt, beispielsweise mittels Federkraft. Diese Funktion des Anpressens wird allerdings nur für den Zeitraum benötigt, in dem die Aufspannvorrichtungen 53, 54 und 55 von ihren Werkstückspindeln getrennt sind. Für die Bearbeitung ist diese Funktion nicht aktiv, und die Reitstockspitzen sind wieder fest an die jeweiligen Ausleger 42a, 42b und 42c gekoppelt.

Wie üblich erfolgt die Drehlagensicherung der Werkstücke spindelstockseitig, während die Reitstockspitzen lediglich der axialen Sicherung dienen.

Obgleich in Fig. 7 eine Schleifschnecke 68 symbolisch als das Werkzeug der zweiten Bearbeitungsstation dargestellt ist, läßt sich die dargestellte Reitstockanordnung 40 natürlich auch für andere Verzahnungsbearbeitungen heranziehen, beispielsweise für die bereits erläuterte Kombination Wälzfräsen-Anfasen/Entgraten-Werkstückwechsel für das Beispiel von drei Spindeln. Die Reitstockanordnung 40 ist aber auch für zwei oder mehr als drei verwendete Aufspannvorrichtungen einsetzbar, mit entsprechend angepaßter Anzahl von Reitstockspitzen 43 nebst Ankopplung.

Des weiteren läßt sich die in Fig. 7 dargestellte Reitstockanordnung auch für andere als vertikale Werkstückspindellagen verwenden, beispielsweise für horizontale Werkstückspindellagen.

Der insbesondere in den Figuren 5 und 7 (vertikale Werkstückspindelachsen) dargestellte Träger 59 ist wiederum scheibenförmig gestaltet und deckt während des Weitertaktens die Verbindungsbereiche der in der Basis 60 angeordneten Werkstückspindeln ab, so daß letztere vor Spänen und anderen Verschmutzungen geschützt sind.

Durch die in den Figuren 5 bis 7 dargestellten, die Drehrichtung des Trägers 59 anzeigenden Pfeile ist angedeutet, daß in diesen Ausführungsbeispielen ein Weitertakten des Trägers 59 immer in der gleichen Drehrichtung erfolgt. Für spezielle Bearbeitungsfolgen, insbesondere wenn ein Werkstück von einem Werkzeug zweimal, aber mit Unterbrechung bearbeitet wird, ist jedoch auch eine Drehrichtungsumkehr denkbar und entsprechend ansteuerbar.

Wie bereits weiter oben erläutert läßt sich vorsehen, daß während des Weitertaktens die Aufspannvorrichtungen 53, 54 und 55 ihre relative Drehlage bezüglich des Trägers 59 beibehalten, so daß aufgrund der Beibehaltung der Aufspannung der Werkstücke die Zahnlückenlage der Werkstücke ausgehend von einer Bearbeitung für die nächste Bearbeitung nachvollzogen werden kann und daher nicht mehr erneut bestimmt werden muß.

Letzteres wird nicht nur während des Drehens des Trägers 59 realisiert, sondern auch im Falle eines eventuellen Energieausfalls. Die stationären Werkstückspindeln können je nach Art der gewünschten Ansteuerung in Position gehalten werden, während sie von den Aufspannvorrichtungen entkoppelt sind, oder auch in eine Drehlage gedreht werden, in der eine vorgegebene azimutale Referenz einer jeweiligen Werkstückspindel gegenüber einer vorgegebenen azimutalen Referenz einer Aufspannvorrichtung immer die gleiche relative Drehlage einnimmt.

Die Erfindung ist nicht auf die in den einzelnen Ausführungsbeispielen vorstehend erläuterten Einzelheiten eingeschränkt. Vielmehr können die Merkmale der nachstehenden Ansprüche sowie der Beschreibung einzeln oder in Kombination für die Verwirklichung der Erfindung in ihren verschiedenen Ausführungsformen wesentlich sein.

## Patentansprüche

1. Verfahren zum Erzeugen und Bearbeiten einer Verzahnung an einem Werkstück (5), bei dem man das Werkstück von einem ersten Ort, an dem es auf einer mit einer Werkstückspindel (1) verbundenen Aufspannvorrichtung (3) aufgespannt in einen die Verzahnung erzeugenden Bearbeitungseingriff mit einem ersten Werkzeug (7) gebracht wird, unter Beibehaltung seiner Aufspannung eine Bewegung zu einem zweiten Ort ausführen lässt, an dem es in einen die erzeugte Verzahnung entgratenden und/oder anfasenden Bearbeitungseingriff mit einem zweiten Werkzeug (8) gebracht wird,
**dadurch gekennzeichnet, dass** man die Verbindung zwischen der Aufspannvorrichtung (3) und der Werkstückspindel (1) vor der Ausführung der Bewegung löst und die Aufspannvorrichtung nach Ausführung der Bewegung für den Bearbeitungseingriff mit dem zweiten Werkzeug (8) mit einer anderen Werkstückspindel (2) verbindet.

2. Verfahren nach Anspruch 1, bei dem parallel zur Bearbeitung des Werkstücks am zweiten Ort an dem ersten Ort eine Verzahnung an einem auf einer zweiten Aufspannvorrichtung aufgespannten weiteren Werkstück (6) erzeugt oder bearbeitet wird.

3. Verfahren nach einem der vorhergehenden Ansprüche, bei dem das Werkstück nach seiner Bearbeitung mit dem zweiten Werkzeug nochmals mit dem ersten Werkzeug bearbeitet wird.

4. Verfahren nach einem der vorhergehenden Ansprüche, bei dem die jeweiligen Ortswechsel des Werkstücks und des weiteren Werkstücks zeitgleich und insbesondere gekoppelt erfolgen.

5. Verfahren nach Anspruch 4, bei dem ein bearbeitetes Werkstück nach dem Lösen einer Aufspannung ohne die Aufspannvorrichtung aus dem Bearbeitungsraum verbracht wird und/oder ein zu bearbeitendes Werkstück erst nach seinem Verbringen in den Bearbeitungsraum auf eine Aufspannvorrichtung aufgespannt wird.

6. Verfahren nach einem der vorhergehenden Ansprüche, bei dem ein während der Werkstückbearbeitung an einem Ort mit der Aufspannvorrichtung verbundener Verbindungsbereich der Werkstückspindel wenigstens während eines Teilintervalls eines Zeitraums zwischen dem Lösen dieser Verbindung bis zur erneuten Herstellung einer Verbindung mit einer Aufspannvorrichtung abgedeckt wird.

7. Verfahren nach einem der vorhergehenden Ansprüche, bei dem die jeweiligen Bearbeitungseingriffe des Werkstücks mit dem ersten und dem zweiten Werkzeug durch deren jeweilige gegenseitige räumliche Lage bestimmt sind, und die Einstellung der gegenseitigen räumlichen Lage bei der zweiten Bearbeitung in Abhängigkeit der gegenseitigen räumlichen Lage bei der ersten Bearbeitung erfolgt.

8. Verzahnungsmaschine (100) mit wenigstens zwei in einem Bearbeitungsraum (20) angeordneten Werkzeugen (7, 8) zum Erzeugen und Bearbeiten einer Verzahnung an einem Werkstück,
wenigstens zwei Werkstückspindeln (1, 2) mittels derer jeweils über eine Aufspannvorrichtung (3, 4) aufgespannte zu bearbeitende Werkstücke (5, 6) drehend, insbesondere drehend angetrieben lagerbar sind,
so dass ein erstes aufgespanntes Werkstück (5) in einen die Verzahnung erzeugenden Bearbeitungseingriff mit einem ersten (7) und parallel dazu ein zweites aufgespanntes Werkstück (6) in einen die erzeugte Verzahnung entgratenden und/oder anfasenden Bearbeitungseingriff mit einem zweiten (8) Werkzeug gebracht werden kann,
**gekennzeichnet durch**
einen Mechanismus zum Lösen und Herstellen einer Verbindung zwischen einer Aufspannvorrichtung und einer Werkstückspindel sowie durch
eine ein Werkstück von einer Werkstückspindel unter Beibehaltung seiner Aufspannung zu einer anderen Werkstückspindel bewegende Einrichtung.

9. Verzahnungsmaschine nach Anspruch 8, bei der die Bewegungseinrichtung einen um eine Drehachse (S) der Bewegungseinrichtung verschwenkbaren Halter (9a) für eine der Aufspannvorrichtungen (4) aufweist.

10. Verzahnungsmaschine nach Anspruch 9, bei der die Bewegungseinrichtung wenigstens einen weiteren um die Drehachse verschwenkbaren Halter (9a) für eine weitere Aufspannvorrichtung (3) aufweist, und bei der insbesondere die Halterbewegungen über eine Kopplung (9r) zwischen den Haltern (9a) zwangsgekoppelt sind.

11. Verzahnungsmaschine nach Anspruch 10, bei der die Kopplung in Form eines gemeinsamen um die Drehachse drehbaren Trägers für die Halter (9) ausgebildet ist.

12. Verzahnungsmaschine nach einem der Ansprüche 9 bis 11, bei der die Bewegungseinrichtung einen Halter/den Träger (9) mit Bewegungskomponente parallel zu wenigstens einer der Werkstückspindelachsen bewegen kann.

13. Verzahnungsmaschine nach einem der Ansprüche 8 bis 12, mit einer Abdeckeinrichtung, welche einen während der Werkstückbearbeitung an einem Ort mit der Aufspannvorrichtung verbundenen Verbindungsbereich der Werkstückspindel wenigstens während eines Teilintervalls eines Zeitraums zwischen dem Lösen dieser Verbindung durch den Verbinde-Mechanismus bis zur erneuten Herstellung einer Verbindung mit einer Aufspannvorrichtung abdeckt.

14. Verzahnungsmaschine nach einem der Ansprüche 8 bis 13, bei der die Aufspannung eines Werkstückes auf einer sich in mit einer Werkstückspindel verbundenem Zustand befindlichen Aufspannvorrichtung lösbar ist, insbesondere über einen innerhalb des Verbinde-Mechanismus geschaffenen Betätigungszugang.

15. Verzahnungsmaschine nach einem der Ansprüche 8 bis 14, bei der der Verbinde-Mechanismus die Verbindung einer Aufspannvorrichtung und einer Werkstückspindel in nur einer oder einer Mehrzahl definierter relativer Drehlagen erlaubt, insbesondere über einen in Umfangsrichtung wirkenden Formschluss und/oder eine während des Ortswechsels bewirkte Drehlagensicherung zwischen Halter und Aufspannvorrichtung.

16. Verzahnungsmaschine nach einem der Ansprüche 8 bis 15, mit einer Steuervorrichtung zur Steuerung der Verzahnungsmaschine nach einem Verfahren gemäß einem der Ansprüche 1 bis 7.

17. Verzahnungsmaschine nach Anspruch 16, bei der die Steuervorrichtung eine Information über die gegenseitige räumliche Lage zwischen einem Werkstück und einem eine Bearbeitung ausführenden Werkzeug erfasst und diese für eine nachfolgende Bearbeitung mit einem anderen Werkzeug verfügbar hält.

## Claims

1. A method of generating and machining gear teeth on a tool (5), wherein the workpiece is subjected to a movement from a first location where the workpiece, while being held by a clamping device (3) connected to a workpiece spindle (1), is brought into a machining engagement with a first tool (7) to generate the gear teeth, to a second location where the workpiece, while remaining in its clamped condition, is brought into a machining engagement with a second tool to deburr and/or chamfer the generated gear teeth, (8),
**characterised in that** prior to performing the movement, the connection between the clamping device (3) and the workpiece spindle (1) is released, and after the movement, the clamping device is connected to another workpiece spindle (2) for the machining engagement with the second tool (8).

2. The method according to claim 1, wherein in parallel with the machining of the workpiece at the second location, a gear tooth profile is being generated or machined at the first location on a further workpiece (6) which is being held by a second clamping device.

3. The method according to one of the preceding claims, wherein the workpiece, subsequent to the machining with the second tool, is machined again with the first tool.

4. The method according to one of the preceding claims, wherein the respective location changes of the workpiece and of the further workpiece occur at the same time and in particular are coupled to each other.

5. The method according to claim 4, wherein a machined workpiece, subsequent to the release of its clamping device, is taken out of the operating space without the clamping device and/or a workpiece that is to be machined is connected to a clamping device only after said workpiece has been brought into the operating space.

6. The method according to one of the preceding claims, wherein a connector portion of the workpiece spindle to which the clamping device is connected during the machining of the workpiece at the respective location is covered during a time interval from the release of said connection until a new connection with a clamping device is made.

7. The method according to one of the preceding claims, wherein the respective machining engagements of the workpiece with the first and the second tool are determined by their respective mutual spatial positions, and wherein the setting of the mutual spatial position for the second machining engagement is dependent on the mutual spatial position in the first machining operation.

8. A gear-cutting machine (100) with at least two tools (7, 8) which are arranged in an operating space (20) for the generating and machining of gear teeth on a workpiece,
with at least two workpiece spindles (1, 2) serving to support workpieces (5, 6), held by respective clamping devices (3, 4), rotatable or rotatably driven,
so that a first clamped workpiece (5) can be brought into a machining engagement, to generating the gear teeth, with a first tool (7) and, in parallel, a second clamped workpiece (6) can be brought into a machining engagement, to deburr and/or chamfer the generated gear teeth, with a second tool (8),
**characterised by**
a mechanism serving to release and to create a connection between a clamping device and a workpiece spindle, and
a device that moves a workpiece from one workpiece spindle to another workpiece spindle while the workpiece remains held by the clamping device.

9. The gear-cutting machine according to claim 8, wherein the workpiece-moving device comprises a holder (9a) for one of the clamping devices (4), which can swivel around a rotary axis (S) of the workpiece-moving device.

10. The gear-cutting machine according to claim 9, wherein the workpiece-moving device comprises at least one further holder (9a) which can swivel about the rotary axis, for a further clamping device (3), and wherein the movements of the holders are rigidly coupled to each other by a coupling connection (9r) between the holders (9a).

11. The gear-cutting machine according to claim 10, wherein the coupling is configured in the form of a common carrier for the holders (9) which is rotatable around the rotary axis.

12. The gear-cutting machine according to one of claims 9 to 11, wherein the workpiece-moving device is designed with the capability to move a holder or the carrier (9) with a directional component running parallel to at least one of the workpiece spindle axes.

13. The gear-cutting machine according to one of claims 8 to 12, with a covering device which, during at least part of a time interval from the release of said connection by the connecting mechanism until a new connection with a clamping device is made, covers up a connector portion of the workpiece spindle to which the clamping device is connected during the machining of the workpiece at the respective location.

14. The gear-cutting machine according to one of claims 8 to 13, wherein the clamping of a workpiece to a clamping device that is in a connected state with a workpiece spindle is releasable, in particular by means of an actuating access created within the connector mechanism.

15. The gear-cutting machine according to one of the claims 8 to 14, wherein the connector mechanism allows a clamping device and a workpiece spindle to be connected to each other in only one defined rotary position or in a plurality of defined relative rotary positions, in particular by means of a form-fitting engagement acting in a circumferential direction and/or by means of a rotary position lock between the holder and clamping device which is effective during the position change.

16. The gear-cutting machine according to one of the claims 8 to 15 comprising a controller device for controlling the gear-cutting machine using a method according to one of claims 1 to 7.

17. The gear-cutting machine according to claim 16, wherein the controller device acquires data defining the mutual spatial positions of a workpiece and a tool performing a machining operation in relation to each other and keeps said data available for a subsequent machining operation with another tool.

## Revendications

1. Procédé de production et d'usinage d'une denture sur une pièce à usiner (5), dans lequel la pièce à usiner est amenée à être déplacée, d'un premier emplacement auquel, maintenue par un dispositif de blocage (3) relié à une broche porte-pièce (1), elle subit un premier contact d'usinage avec un premier outil (7) visant à produire la denture, à un deuxième emplacement, avec conservation dudit blocage, auquel elle subit un contact d'usinage avec un deuxième outil (8) visant à ébarber et/ou à chanfreiner la denture produite,
**caractérisé en ce que** la liaison entre le dispositif de blocage (3) et la broche porte-pièce (1) est rompue avant la réalisation du déplacement, et une liaison est établie entre le dispositif de blocage et une autre broche porte-pièce (2) une fois le déplacement effectué, en vue du contact d'usinage avec le deuxième outil (8).

2. Procédé selon la revendication 1, dans lequel, parallèlement à l'usinage de la pièce à usiner au deuxième emplacement, il s'effectue la production ou l'usinage d'une denture sur une autre pièce à usiner (6) montée sur un deuxième dispositif de blocage, audit premier emplacement.

3. Procédé selon l'une des revendications précédentes, dans lequel, après l'usinage de la pièce à usiner au moyen du deuxième outil, celle-ci est de nouveau usinée au moyen du premier outil.

4. Procédé selon l'une des revendications précédentes, dans lequel les changements d'emplacements de la pièce à usiner et de l'autre pièce à usiner s'effectuent simultanément et notamment de façon couplée.

5. Procédé selon la revendication 4, dans lequel, une fois le blocage rompu, une pièce en cours d'usinage est transférée hors de l'espace d'usinage sans le dispositif de blocage et/ou une pièce destinée à être à usiner n'est montée sur un dispositif de blocage qu'après son transfert dans l'espace d'usinage.

6. Procédé selon l'une des revendications précédentes, dans lequel une zone de liaison de la broche porte-pièce, qui est liée au dispositif de blocage pendant l'usinage de la pièce en un emplacement, est recouverte au moins pendant une partie du temps compris entre la rupture de cette liaison et l'établissement d'une nouvelle liaison avec un dispositif de blocage.

7. Procédé selon l'une des revendications précédentes, dans lequel les contacts d'usinage de la pièce à usiner avec le premier et le deuxième outil sont déterminés par leur position spatiale mutuelle, et le réglage de la position spatiale mutuelle propre au deuxième usinage s'effectue compte tenu de la position spatiale mutuelle propre au premier usinage.

8. Machine à usiner les dentures (100) comportant au moins deux outils (7, 8) disposés dans un espace d'usinage (20) pour produire et usiner une denture sur une pièce à usiner, et
au moins deux broches porte-pièce (1, 2) au moyen desquelles des pièces (5, 6) destinées à être usiner sont susceptibles d'être montées sur un dispositif de blocage (3, 4) respectif, en étant rotatives, notamment en étant entraînées en rotation,
de manière qu'une première pièce à usiner (5) bloquée peut être amenée à subir un contact d'usinage avec un premier outil (7) visant à produire la denture et, parallèlement, une deuxième pièce à usiner (6) bloquée peut être amenée à subir un contact d'usinage avec un deuxième outil (8) visant à ébarber et/ou à chanfreiner la denture produite,
**caractérisée par**
un mécanisme permettant de rompre et d'établir une liaison entre un dispositif de blocage et une broche porte-pièce ainsi que par
un dispositif déplaçant une pièce à usiner d'une broche porte-pièce vers une autre broche porte-pièce avec conservation dudit blocage.

9. Machine à usiner les dentures selon la revendication 8, dans laquelle le dispositif de déplacement présente un support (9a), destiné à l'un des dispositifs de blocage (4), susceptible de pivoter sur un axe de rotation (S) du dispositif de déplacement.

10. Machine à usiner les dentures selon la revendication 9, dans laquelle le dispositif de déplacement présente au moins un autre support (9a), destiné à un autre dispositif de blocage (3) et susceptible de pivoter sur ledit axe de rotation, et dans laquelle notamment le déplacement des supports s'effectue par couplage forcé par le biais d'un couplage (9r) entre les supports (9a).

11. Machine à usiner les dentures selon la revendication 10, dans laquelle le couplage est conçu sous forme d'un dispositif porteur commun pour les supports (9), susceptible de tourner sur ledit axe de rotation.

12. Machine à usiner les dentures selon l'une des revendications 9 à 11, dans laquelle le dispositif de déplacement peut déplacer un dispositif porteur / le support (9) avec une composante de déplacement parallèle à au moins un des axes de broche porte-pièce.

13. Machine à usiner les dentures selon l'une des revendications 8 à 12, comportant un dispositif formant couvercle qui, au cours de l'usinage de la pièce en un emplacement, recouvre une zone de liaison de la broche porte-pièce qui est liée au dispositif de blocage, au moins pendant une partie du temps compris entre la rupture de cette liaison effectuée par le mécanisme de liaison et l'établissement d'une nouvelle liaison avec un dispositif de blocage.

14. Machine à usiner les dentures selon l'une des revendications 8 à 13, dans laquelle le blocage d'une pièce à usiner sur un dispositif de blocage se trouvant à l'état lié à une broche porte-pièce est susceptible d'être rompu, notamment par le biais d'un accès d'actionnement créé dans le mécanisme de liaison.

15. Machine à usiner les dentures selon l'une des revendications 8 à 14, dans laquelle le mécanisme de liaison permet la liaison d'un dispositif de blocage et d'une broche porte-pièce selon une ou plusieurs positions de rotation relatives définies, notamment par le biais d'une complémentarité de forme agissant dans le sens circonférentiel et/ou d'une protection de position de rotation agissant entre le support et le dispositif de blocage pendant le changement d'emplacements.

16. Machine à usiner les dentures selon l'une des revendications 8 à 15, comportant un dispositif de commande destiné à commander la machine à usiner les dentures suivant le procédé selon l'une des revendications 1 à 7.

17. Machine à usiner les dentures selon la revendication 16, dans laquelle le dispositif de commande obtient une information concernant la position spatiale mutuelle entre une pièce à usiner et un outil effectuant l'usinage et tient cette information disponible pour un usinage subséquent au moyen d'un autre outil.
